# EUROPEAN PATENT APPLICATION

(11) **EP 4 404 614 A1**
(43) Date of publication of application: **24.07.2024**
(21) Application number: 22869327.1
(22) Date of filing: 15.09.2022
(51) Int. Cl.: H04W 24/02

(54) **TRANSMISSION METHOD AND APPARATUS UNDER DISCONTINUOUS RECEPTION**

(30) Priority: 15.09.2021 CN 202111082893
(71) Applicant: Vivo Mobile Communication Co., Ltd., Dongguan, Guangdong 523863 (CN)
(72) Inventor: YANG, Yuming, Dongguan, Guangdong 523863 (CN); JI, Zichao, Dongguan, Guangdong 523863 (CN); LIU, Siqi, Dongguan, Guangdong 523863 (CN); PENG, Shuyan, Dongguan, Guangdong 523863 (CN)
(74) Representative: Conti, Marco
(86) International application number: PCT/CN2022/119027
(87) International publication number: WO 2023/040959

(57) **Abstract**

This application pertains to the field of wireless communications technologies, and discloses a transmission method and apparatus in discontinuous reception. The transmission method in discontinuous reception in embodiments of this application includes: when a first preset condition is met, performing, by a terminal, sensing and/or measurement in a DRX inactive state; or when a second preset condition is met, skipping, by a terminal, sensing and/or measurement in a DRX inactive state; and/or when performing sensing and/or measurement in the DRX inactive state, meeting, by the terminal, a third preset condition.

## Description

### CROSS-REFERENCE TO RELATED APPLICATIONS

This application claims priority to Chinese Patent Application No. 202111082893.5, filed in China on September 15, 2021, which is incorporated herein by reference in its entirety.

### TECHNICAL FIELD

This application pertains to the field of wireless communications technologies, and specifically relates to a transmission method and apparatus in discontinuous reception.

### BACKGROUND

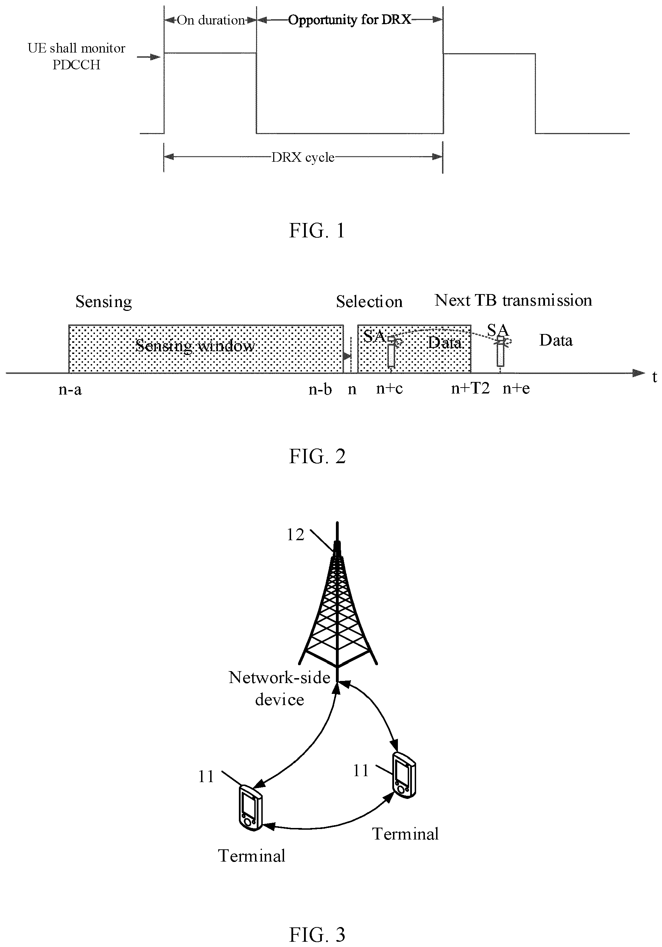

A discontinuous reception (Discontinuous Reception, DRX) mechanism is introduced in both long term evolution (Long Term Evolution, LTE) and new radio (New Radio, NR) to achieve power saving of user equipment (user equipment, UE) (also referred to as a terminal) by configuring a DRX on time (on) and off (off) time. As shown in FIG. 1, an active (On Duration) period is a DRX on interval. If there is no scheduling, the UE enters an off period of a DRX cycle (cycle) after the on duration period.

In an LTE sidelink (sidelink, SL), resource selection needs to be performed through sensing (Sensing). Referring to FIG. 2, a basic operating principle is as follows: Measurement is performed within a sensing window (Sensing window). At each sensing transmission time interval (Transmission Time Interval, TTI), scheduling assignment (Scheduling Assignment, SA) is decoded, and interference measurement is performed. The UE performs the resource selection according to the following steps:
(a) The UE excludes resources for sending data.
(b) The UE demodulates the received SA to obtain resources reserved by other UEs, and excludes the resources reserved by the other UEs.
(c) The UE performs power sensing within the sensing window, measures a reference signal strength indicator (Reference Signal Strength Indication, RSSI), and excludes a resource with high interference based on a measurement result.
(d) The UE randomly selects, within a selection window, a subframe (subframe) from 20% resources with lowest interference, for periodic resource reservation.

In a mode 2 (Mode 2) resource allocation mode, an NR sidelink supports resource selection based on sensing, and a specific working mode thereof is as follows: (1) Transmitting (Transmitting, TX) UE determines a resource selection window after the resource selection is triggered. (2) Before the resource selection, the UE needs to determine a candidate resource set (candidate resource set) for the resource selection, and compares reference signal received power (Reference Signal Received Power, RSRP) measured on a resource within the resource selection window with a corresponding RSRP threshold (threshold). If the RSRP is lower than the RSRP threshold, the resource may be included in the candidate resource set. (3) After the resource set is determined, the UE randomly selects transmission resources from the candidate resource set. In addition, during this transmission, the UE may reserve transmission resources for a subsequent transmission.

The DRX mechanism is introduced in the NR sidelink to achieve power saving. To ensure reliability of sending a service, the terminal needs to perform sensing or measurement in a DRX inactive state. However, if the terminal is allowed to perform sensing and/or measurement in the DRX inactive state as in a DRX active state, and a behavior of sensing or measurement is not restricted, a power saving effect of DRX may be weakened, and an objective of introducing the DRX mechanism cannot be achieved. Therefore, it is necessary to study the behavior of sensing and/or measurement in the DRX inactive state, to achieve power saving while ensuring service reliability.

### SUMMARY

Embodiments of this application provide a transmission method and apparatus in discontinuous reception, to resolve a problem that it is difficult to achieve power saving while ensuring service reliability because an existing solution does not clarify a behavior of sensing and/or measurement in a DRX inactive state.

According to a first aspect, a transmission method in discontinuous reception is provided and includes:
when a first preset condition is met, performing, by a terminal, sensing and/or measurement in a DRX inactive state; or when a second preset condition is met, skipping, by a terminal, sensing and/or measurement in a DRX inactive state;
   and/or
when performing sensing and/or measurement in the DRX inactive state, meeting, by the terminal, a third preset condition.

According to a second aspect, a transmission apparatus in discontinuous reception is provided and includes:
a first processing module, configured to: when a first preset condition is met, perform sensing and/or measurement in a DRX inactive state; or when a second preset condition is met, skip sensing and/or measurement in a DRX inactive state;
   and/or
a second processing module, configured to meet a third preset condition when performing sensing and/or measurement if sensing and/or measurement are/is performed in the DRX inactive state.

According to a third aspect, a terminal is provided. The terminal includes a processor, a memory, and a program or instructions stored in the memory and capable of running on the processor. When the program or instructions are executed by the processor, the steps of the method according to the first aspect are implemented.

According to a fourth aspect, a readable storage medium is provided. The readable storage medium stores a program or instructions. When the program or instructions are executed by a processor, the steps of the method according to the first aspect are implemented.

According to a fifth aspect, a terminal is provided. The terminal includes a processor, a memory, and a program or instructions stored in the memory and capable of running on the processor. When the program or instructions are executed by the processor, the steps of the method according to the first aspect are implemented.

According to a sixth aspect, a terminal is provided. The terminal includes a processor and a communication interface. The processor is configured to: when a first preset condition is met, perform sensing and/or measurement in a DRX inactive state; or when a second preset condition is met, skip sensing and/or measurement in a DRX inactive state; and/or meet a third preset condition when performing sensing and/or measurement if sensing and/or measurement are/is performed in the DRX inactive state.

According to a seventh aspect, a readable storage medium is provided. The readable storage medium stores a program or instructions. When the program or instructions are executed by a processor, the steps of the method according to the first aspect are implemented.

According to an eighth aspect, a chip is provided. The chip includes a processor and a communication interface. The communication interface is coupled to the processor. The processor is configured to run a program or instructions to implement the method according to the first aspect.

According to a ninth aspect, a computer program product is provided. The computer program product is stored in a non-volatile storage medium. The computer program product is executed by at least one processor to implement the steps of the method according to the first aspect.

According to a tenth aspect, a communication device is provided. The communication device is configured to perform the steps of the method according to the first aspect.

In the embodiments of this application, a specific behavior of sensing and/or measurement of the terminal in the inactive state is clarified, so that when the terminal performs sensing and/or measurement in the DRX inactive state, power saving is achieved while service reliability is ensured.

### BRIEF DESCRIPTION OF DRAWINGS

FIG. 1 is a schematic diagram of a DRX cycle;
FIG. 2 is a schematic diagram of resource selection through sensing in an LTE sidelink;
FIG. 3 is a block diagram of a wireless communications system to which an embodiment of this application may be applied;
FIG. 4 is a schematic diagram of a partial sensing mode performed by a terminal;
FIG. 5 is a schematic diagram of an SL resource preemption mode in an NR SL;
FIG. 6 is a schematic flowchart of a method for implementing discontinuous reception according to an embodiment of this application;
FIG. 7 is a schematic diagram of a partial sensing mode according to Embodiment 3 of this application;
FIG. 8 is a schematic diagram of a structure of an apparatus for implementing discontinuous reception according to an embodiment of this application;
FIG. 9 is a schematic diagram of a structure of a terminal according to an embodiment of this application; and
FIG. 10 is a schematic diagram of a hardware structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communications system.

FIG. 3 is a block diagram of a wireless communications system to which an embodiment of this application may be applied. The wireless communications system includes a terminal 11 and a network-side device 12. The terminal 11 may also be referred to as a terminal device or a user terminal (User Equipment, UE). The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device), vehicular user equipment (Vehicle User Equipment, VUE), or pedestrian user equipment (Pedestrian User Equipment, PUE). The wearable device includes a smartwatch, a smart band, a headphone, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a Wireless Fidelity (Wireless Fidelity, Wi-Fi) node, a transmission and reception point (Transmission and Reception Point, TRP), or another appropriate term in the art, as long as the same technical effect is achieved. The base station is not limited to specific technical terms. It should be noted that in the embodiments of this application, only a base station in an NR system is used as an example, but a specific type of the base station is not limited.

The following first briefly describes some technical terms related to this application.

### 1. DRX

In a DRX configuration, parameters such as a DRX on duration timer (On Duration Timer), a DRX inactivity timer (DRX-Inactivity Timer), a DRX retransmission timer (DRX-Retransmission Timer), and a long DRX cycle start offset (Long DRX-Cycle Start Offset) are configured.

After DRX is configured for UE, if decoding of data sent or received fails, the UE needs to enter an active state to monitor a control channel and wait for retransmission scheduled by a network.

In an on duration period, if the UE is scheduled in a slot (slot), after the UE receives data, the UE is likely to continue to be scheduled in next few slots. Therefore, the timer DRX-Inactivity Timer is started or restarted every time the UE is scheduled to initially transmit data, and the UE remains in an active state until the timer expires.

For receiving downlink data, after receiving the downlink data transmission indicated by a physical downlink control channel (Physical Downlink Control Channel, PDCCH) and feeding back hybrid automatic repeat request (Hybrid automatic repeat request, HARQ) acknowledgement information, the UE starts a downlink round trip time (Round Trip Time, RTT) timer (HARQ RTT Timer) for a corresponding HARQ process. If the HARQ RTT Timer expires and the data of the HARQ process is not successfully decoded, the UE starts the DRX-Retransmission Timer, and monitors the PDCCH to wait for transmission.

For sending uplink data, after the UE receives the uplink data transmission indicated by the PDCCH, the UE starts an uplink round trip time timer HARQ RTT Timer for a corresponding HARQ process. After the HARQ RTT Timer expires, the UE starts the DRX-Retransmission Timer, and enters the active state to monitor the PDCCH and wait for transmission scheduled by the network.

### 2. Partial sensing (Partial sensing) in an LTE SL (Partial sensing in LTE SL)

Partial sensing in LTE vehicle to everything (Vehicle to Everything, V2X) is mainly designed to save power and support communication from a pedestrian handheld terminal to a vehicular terminal (Pedestrian UE to Vehicle UE, P2V). The UE supports two resource selection modes. One mode is random resource selection. The other mode is to perform partial sensing first, select resources based on a partial sensing result, and perform semi-static resource reservation. Which mode is to be selected by the UE is configured by radio resource control (Radio Resource Control, RRC). When support for two resource selection modes is configured by RRC, the UE determines a resource selection mode to be used.

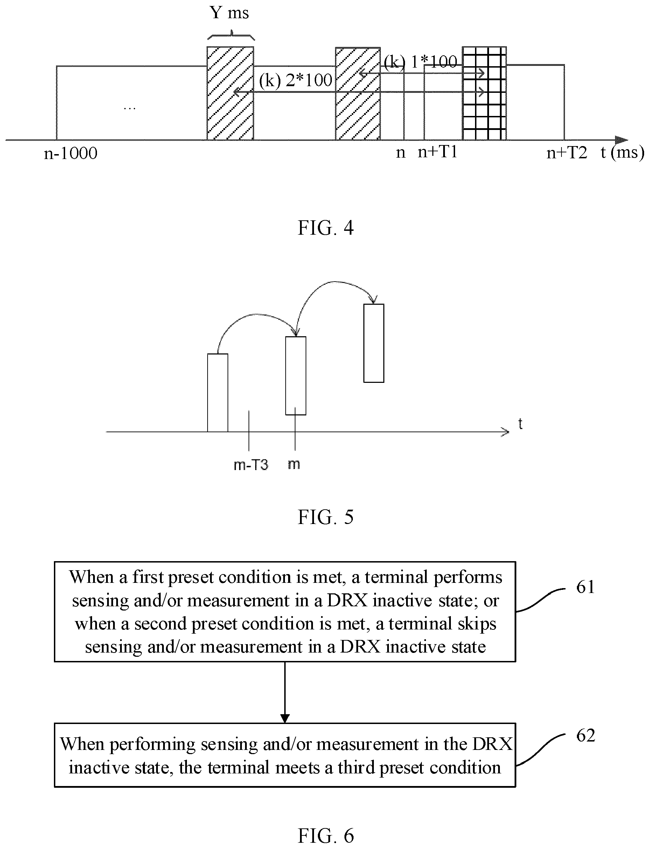

Specifically, referring to FIG. 4, the terminal performs partial sensing and resource sensing in the following mode:
A sensing window of the UE is a striped window within a range of [n-1000, n]. A length Y and k are parameters configured by RRC. A value of k may be within a range of {1, 2, 3, ..., 10}. A grid window within [n+T1, n+T2] is a selection window configured by a higher layer for the UE. In the striped sensing window, the UE senses sidelink control information (Sidelink Control Information, SCI) sent by other terminals. Based on the sensed SCI and a reservation period, the UE infers a resource reservation status of other terminals in the grid window. Based on the information, the UE may exclude resources in the selection window that do not meet a condition. At least 20% (20% of the window length Y) of remaining resources are selected as a candidate resource set, and reported to a media access control (Media Access Control, MAC) layer. The MAC layer randomly selects a resource from the candidate resource set as a candidate resource for the UE. The UE reserves the selected resource periodically, where the reservation period is indicated in the SCI.

### 3. Random selection in a sidelink (Random selection in SL)

If a user performs random selection, a resource is randomly selected within the selection window, and there is no need to perform sensing.

In an NR SL in Release 16 (Rel-16), TX UE reserves resources with respect to resources allocated to the UE (reservation is classified into periodic reservation and aperiodic reservation), and the reserved resources are used for transmitting a physical sidelink control channel (Physical Sidelink Control Channel, PSCCH) or a physical sidelink shared channel (Physical Sidelink Shared Channel, PSSCH) later. Aperiodic reservation may be implemented by using a time domain resource allocation (Time resource assignment) field in SCI, and the reserved resources may be used for transmitting at least a same TB. Periodic reservation may be implemented by using a resource reservation period (Resource Reservation Period) field in the SCI. Periodic resources reserved in a current period may be used for transmitting a next transport block (Transport Block, TB).

### 4. Resource preemption in an NR SL (Resource preemption in NR SL)

In a mode 2 resource allocation mode, a resource preemption (preemption) mechanism is supported. This mechanism is briefly described as follows: If a resource reserved or selected by UE overlaps (or partially overlaps) a resource reserved or selected by other UE having a higher-priority service, when a measurement value of SL-RSRP of the UE on the resource is greater than an associated (associated) SL-RSRP threshold, the UE triggers resource reselection. The service priority and the SL-RSRP threshold are determined by a TB transmission on the resource.

As shown in FIG. 5, the UE re-evaluates resource selection at least at a moment 'm-T3', so that the UE determines whether the reserved or selected resource (PSCCH or PSSCH resource) has been preempted, where a moment 'm' is a moment at which the resource is located or a moment at which resource reservation information is sent, and T3 includes at least duration of resource selection processing performed by the UE.

A transmission method and apparatus in discontinuous reception according to the embodiments of this application are hereinafter described in detail by using some embodiments and application scenarios thereof with reference to the accompanying drawings.

It should be noted that, in this application, sensing (Sensing) may mean receiving a PSCCH, SCI, or the like.

Partial sensing may include at least one of the following: periodic-based partial sensing (Periodic-Based Partial Sensing, PBPS) and contiguous partial sensing (Contiguous Partial Sensing, CPS).

In this application, time units may be expressed as symbols, slots, subframes, frames, milliseconds, seconds, times, or the like.

FIG. 6 is a schematic flowchart of a transmission method in discontinuous reception according to an embodiment of this application.

Step 61: When a first preset condition is met, a terminal performs sensing and/or measurement in a DRX inactive state; or when a second preset condition is met, a terminal skips sensing and/or measurement in a DRX inactive state;
and/or
Step 62: When performing sensing and/or measurement in the DRX inactive state, the terminal meets a third preset condition.

In this embodiment of this application, a specific behavior of sensing and/or measurement of the terminal in the inactive state is clarified, so that when the terminal performs sensing and/or measurement in the DRX inactive state, power saving is achieved while service reliability is ensured.

In this embodiment of this application, the first preset condition and/or the second preset condition include/includes at least one of the following:
(1) A priority of a data packet or a service is higher than or equal to a first priority threshold.
   For example, if the priority of the data packet or the service is higher than the first priority threshold (or a priority value is less than a threshold), sensing and/or measurement are/is performed in the inactive state. In this embodiment of this application, optionally, a smaller priority value indicates a higher priority.
(2) The priority of the data packet or the service is lower than or equal to a second priority threshold.
   For example, if the priority of the data packet or the service is lower than the second priority threshold (or the priority value is greater than a threshold), sensing and/or measurement are/is skipped in the inactive state. In this embodiment of this application, optionally, a smaller priority value indicates a higher priority.
(3) A packet delay budget (Packet delay Budget, PDB) is less than or equal to a first PDB threshold.
   In this embodiment of this application, optionally, when the PDB is small, the data packet needs to be sent out in time. Therefore, sensing and/or measurement can be performed in the inactive state to improve transmission reliability of the data packet.
(4) The PDB is greater than or equal to a second PDB threshold.
   In this embodiment of this application, optionally, when the PDB is large enough, the packet can be sent after waiting for sensing in an active period (on-duration time), and there is no need to perform sensing in the DRX inactive state.
(5) The terminal is located in a specific resource pool.
   Optionally, the specific resource pool is a predefined, preconfigured, or configured resource pool. For example, when the terminal is configured in a resource pool that is more inclined to save power, sensing and/or measurement are/is skipped in the DRX inactive state. However, if the terminal is configured in a resource pool that is more inclined to ensure reliability, sensing and/or measurement need/needs to be performed in the DRX inactive state.
(6) An assisting terminal provides assistance information for the terminal.
   For example, assisting UE may provide recommended resources, non-recommended resources, and/or sensed resource collisions for the terminal, and the terminal can rely on the assistance information to perform resource selection and therefore does not need to perform sensing and/or measurement in the inactive state.
   In this embodiment of this application, optionally, that a terminal skips sensing and/or measurement in a DRX inactive state when a second preset condition is met includes: when the assisting terminal provides the assistance information for the terminal, the terminal skips sensing and/or measurement in the DRX inactive state.
   In this embodiment of this application, optionally, that a terminal performs sensing and/or measurement in a DRX inactive state when a first preset condition is met includes:
   when the assisting terminal provides the assistance information for the terminal, and at least one of a priority of the assistance information, QoS, and the PDB meets a corresponding threshold, the terminal performs sensing and/or measurement in the DRX inactive state;
      or
   when the assisting terminal provides the assistance information for the terminal, and at least one of the priority of the data packet, quality of service (Quality of service, QoS), and the PDB meets a corresponding threshold, the terminal performs sensing and/or measurement in the DRX inactive state.
(7) A second parameter meets a fourth preset condition, where the second parameter includes at least one of the following: a power saving mode (Power saving mode), a resource allocation scheme (Resource allocation scheme), a DRX cycle, DRX on duration, a ratio of DRX on duration to the DRX cycle, DRX inactive duration, a ratio of DRX inactive duration to the DRX cycle, a transmission period of the data packet, power of the terminal, the priority of the data packet or the service, and a first measurement quantity.

In this embodiment of this application, optionally, the first measurement quantity includes at least one of the following: QoS, a channel occupancy ratio (Channel Occupancy Ratio, CR), channel occupancy, a channel busy ratio (Channel Busy Ratio, CBR), a channel blocking ratio, channel blockage, a channel idle ratio, channel idleness, a quantity of acknowledgements (Acknowledgement, ACK), a quantity of successful data packet transmissions, a data packet transmission success ratio, a quantity of negative acknowledgements (Negative Acknowledgement, NACK), a quantity of failed data packet transmissions, a data packet transmission failure ratio, a quantity of discontinuous transmission (Discontinuous Transmission, DTX), a quantity of missed sensing in sensing, and a quantity of false sensing in sensing of a system, a carrier, a bandwidth part (Bandwidth Part, BWP), a resource pool, a user, or a connection group.

In other words, the first measurement quantity may be a first measurement quantity of the system, carrier, BWP, resource pool, user, or connection group.

In this embodiment of this application, optionally, the fourth preset condition includes at least one of the following:
(1) A value of the second parameter is greater than or equal to a first threshold.
(2) The value of the second parameter is less than or equal to a second threshold.
   For example, when the CBR or the CR is greater than the first threshold, it indicates that a system congestion level is high. In this case, sensing needs to be performed to ensure transmission reliability, and therefore, sensing and/or measurement are/is allowed in the inactive state. Conversely, when the CBR or the CR is less than the second threshold, it indicates that the system congestion level is low. In this case, power saving of the terminal can be preferentially ensured, and therefore, sensing and/or measurement are/is not allowed in the inactive state.
   Alternatively, when the data packet transmission success ratio is greater than the first threshold or the failure ratio is less than the second threshold, it indicates that transmission reliability is high in this case, and therefore, sensing and/or measurement are/is not allowed in the inactive state. Alternatively, when the transmission success ratio is less than the second threshold or the failure ratio is greater than the first threshold, it indicates that transmission reliability is low. In this case, sensing and/or measurement need/needs to be performed in the inactive state to ensure performance, and therefore, the terminal is allowed to perform sensing and/or measurement in the inactive state.
(3) A level of the second parameter is greater than or equal to a third threshold.
(4) The level of the second parameter is less than or equal to a fourth threshold.
   For example, when a battery level or a power level is greater than the third threshold, it indicates that the terminal does not need to consider power consumption or the like in this case, and therefore, the terminal can be allowed to perform sensing and/or measurement in the inactive state. Conversely, when the battery level or the power level is less than the fourth threshold, it indicates that power of the terminal is low. In this case, a battery life needs to be preferentially ensured, and the terminal can be forbidden to perform sensing and/or measurement in the inactive state.
(5) The terminal is in a specific mode or mechanism.

For example, when the terminal is in the power saving mode or the resource allocation scheme that preferentially ensures the battery life, the terminal is not allowed to perform sensing and/or measurement in the inactive state, or when the terminal is in the power saving mode or the resource allocation scheme that preferentially ensures transmission reliability, the terminal is allowed to perform sensing and/or measurement in the inactive state.

In this embodiment of this application, at least one of the first threshold, the second threshold, the third threshold, and the fourth threshold is predefined in a protocol, preconfigured by a network, configured by a network, indicated by a network, preconfigured by the terminal, configured by the terminal, or indicated by the terminal. The first threshold and the second threshold may be a same threshold, or may be independently configured thresholds. The third threshold and the fourth threshold may be a same threshold, or may be independently configured thresholds.

In this embodiment of this application, optionally, the first preset condition, the second preset condition, and/or the third preset condition include/includes: a first parameter for performing sensing and/or measurement in the DRX inactive state on each terminal, each communication link, or each terminal communication group meets at least one of a preset maximum value and a preset minimum value. When the third preset condition is met, the terminal stops or continues sensing and/or measurement in the inactive state. The communication link refers to a link between a sending terminal and a receiving terminal as well as the sending terminal and the receiving terminal.

In this embodiment of this application, optionally, the first parameter includes at least one of the following: a quantity of TBs, a quantity of sidelink processes (process), a quantity of HARQ processes, a quantity of MAC protocol data units (Protocol Data Unit, PDU), a quantity of sensing periods of partial sensing, a quantity of PBPS, a quantity of sensing occasions for PBPS, and a quantity of CPS.

In this embodiment of this application, optionally, at least one of the preset maximum value and the preset minimum value is predefined in a protocol, preconfigured by a network, configured by a network, indicated by a network, preconfigured by the terminal, configured by the terminal, or indicated by the terminal.

In this embodiment of this application, optionally, at least one of the preset maximum value and the preset minimum value is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

In this embodiment of this application, optionally, the first measurement quantity includes at least one of the following: QoS, a CR, channel occupancy, a CBR, a channel blocking ratio, channel blockage, a channel idle ratio, channel idleness, a quantity of ACKs, a quantity of successful data packet transmissions, a data packet transmission success ratio, a quantity of NACKs, a quantity of failed data packet transmissions, a data packet transmission failure ratio, a quantity of DTXs, a quantity of missed sensing in sensing, and a quantity of false sensing in sensing of a system, a carrier, a BWP, a resource pool, a user, or a connection group.

The power saving mode may be a corresponding restriction specified at a preset level. For example, there is a threshold for the sensing time in the DRX inactive state at level 1, and another threshold at level 2; or in other words, sensing, measurement, reception, and the like are skipped at level 1 to save power, a receiving operation is allowed at level 2, and sensing, measurement, reception, and the like are allowed at level 3. Alternatively, the power saving mode may be a preset mechanism for sending or receiving. For example, random selection is a power saving mode, partial sensing is a power saving mode, and full sensing is another power saving mode.

In this embodiment of this application, optionally, the first preset condition, the second preset condition, and/or the third preset condition include/includes: within a first time window or duration of a first timer, a first measurement parameter of the terminal, a sidelink process, a HARQ process, a communication link, or a communication group is not less than a fifth threshold and/or is not greater than a sixth threshold. In this embodiment, the fifth threshold within a time period is defined to ensure that the terminal performs at least sensing and/or measurement, thereby enhancing reliability, and the sixth threshold is defined to restrict the behavior of sensing and/or measurement of the terminal, thereby achieving power saving.

In this embodiment of this application, optionally, the first measurement parameter includes at least one of the following: duration of sensing and/or measurement, a quantity of sensing and/or measurement, a quantity of transitions from a sleep state to a wake-up state, a battery or power level, and a first measurement quantity.

In this embodiment of this application, optionally, the first measurement quantity includes at least one of the following: QoS, a CR, channel occupancy, a CBR, a channel blocking ratio, channel blockage, a channel idle ratio, channel idleness, a quantity of ACKs, a quantity of successful data packet transmissions, a data packet transmission success ratio, a quantity of NACKs, a quantity of failed data packet transmissions, a data packet transmission failure ratio, a quantity of DTXs, a quantity of missed sensing in sensing, and a quantity of false sensing in sensing of a system, a carrier, a BWP, a resource pool, a user, or a connection group.

In this embodiment of this application, optionally, at least one of the duration of sensing and/or measurement and the quantity of sensing and/or measurement counts forward from a first moment or counts forward from a most recent T^{th} window before a first moment, where T is a positive integer greater than or equal to 1.

In this embodiment of this application, optionally, the duration of sensing and/or measurement includes at least one of the following: a quantity of sensing occasions (Sensing occasion), a quantity of time units for sensing, a quantity of sensing occasions for PBPS, a CPS window length, a quantity of time units for CBR measurement, a quantity of time units for RSRP measurement, or a quantity of time units for CR measurement.

In this embodiment of this application, optionally, the first measurement parameter is calculated only in an inactive time period within the first time window or the duration of the first timer, or calculated in all time periods within the first time window or the duration of the first timer.

In this embodiment of this application, optionally, the first time window is continuous or discontinuous (for example, a time in an active state is skipped) in time domain.

In this embodiment of this application, optionally, the first time window is one of the following: NDRX cycles, M time units, and an entire communication process of a service (that is, no time window limit is set), where N and M are positive integers greater than or equal to 1.

In this embodiment of this application, optionally, the time unit counts forward from a first moment or counts forward from a most recent T^{th} window before a first moment, where T is a positive integer greater than or equal to 1. That the time unit counts from the first moment or the most recent window is equivalent to preferentially ensuring sensing and/or measurement nearer to the first moment. For example, "most recent before the first moment" may be a sensing occasion corresponding to a smallest k value before the first moment, or may be a most recent sensing occasion, where Preserve is a sensing period of partial sensing, y is a candidate slot, and k is a sensing step.

In this embodiment of this application, optionally, the first moment is a time for triggering resource selection, or a P^{th} slot among candidate slots for resource selection, or a time for resource reporting, where P is a positive integer greater than or equal to 1.

In this embodiment of this application, optionally, time units of the first time window, the first timer, the fifth threshold, and/or the sixth threshold are symbols, slots, frames, milliseconds, seconds, or times.

In this embodiment of this application, optionally, the first time window, the first timer, the fifth threshold, and/or the sixth threshold are/is predefined in a protocol, configured by a network, preconfigured by a network, configured by the terminal, preconfigured by the terminal, or indicated by the terminal.

In this embodiment of this application, optionally, the first time window, the first timer, the fifth threshold, and/or the sixth threshold are/is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

In this embodiment of this application, optionally, the first measurement quantity includes at least one of the following: QoS, a channel occupancy ratio, channel occupancy, a channel busy ratio, a channel blocking ratio, channel blockage, a channel idle ratio, channel idleness, a quantity of ACKs, a quantity of successful data packet transmissions, a data packet transmission success ratio, a quantity of NACKs, a quantity of failed data packet transmissions, a data packet transmission failure ratio, a quantity of DTXs, a quantity of missed sensing in sensing, and a quantity of false sensing in sensing of a system, a carrier, a BWP, a resource pool, a user, or a connection group.

In this embodiment of this application, optionally, the third preset condition includes at least one of the following:
performing sensing and/or measurement based on a resource allocation scheme or a resource sensing mechanism predefined in a protocol, preconfigured by a network side, configured by a network, indicated by a network, preconfigured by the terminal, configured by the terminal, or indicated by the terminal, that is, there is no additional restriction on the behavior of sensing and/or measurement in the inactive state, where for example, when a resource allocation mode of the terminal is random selection, sensing and/or measurement are/is skipped, and when a sensing mode of the terminal is PBPS, sensing and/or measurement are/is performed based on PBPS;
performing sensing and/or measurement only based on PBPS, that is, sensing and/or measurement in the inactive state are/is performed only within a corresponding time of PBPS, or sensing and/or measurement in the inactive state can be performed only when the resource sensing mechanism is PBPS;
performing sensing and/or measurement only based on CPS, that is, sensing and/or measurement in the inactive state are/is performed only within a corresponding time of CPS, or sensing and/or measurement in the inactive state can be performed only when the resource sensing mechanism is CPS;
performing sensing and/or measurement only based on full sensing (Full sensing), that is, sensing and/or measurement in the inactive state are/is performed at all corresponding times, or sensing and/or measurement in the inactive state can be performed only when the resource allocation scheme and/or the resource sensing mechanism are/is full sensing; and
performing sensing and/or measurement only based on PBPS and CPS, that is, sensing and/or measurement in the inactive state are/is performed only within a corresponding time of PBPS and a corresponding time of CPS, or sensing and/or measurement in the inactive state can be performed only when the resource sensing mechanism is PBPS and/or CPS.

In this embodiment of this application, optionally, the transmission method in discontinuous reception further includes at least one of the following:

### (1) Measuring RSRP based on a PSSCH

Measuring RSRP based on the PSSCH is predefined in a protocol, preconfigured by a network side, configured by a network, indicated by a network, preconfigured by the terminal, configured by the terminal, or indicated by the terminal, that is, consistent with a measurement object in a behavior of measuring a CBR and/or a CR or the like. Therefore, when continuously measuring the CBR and/or the CR or the like based on the PSSCH at an RRC layer or measuring the CBR and/or the CR based on the PSSCH at a physical layer, the terminal does not need to additionally measure the PSCCH to obtain RSRP. For example, measuring RSRP based on the PSSCCH is not allowed or configured, so that this measurement object is consistent with the measurement object in the behavior of measuring the CBR and/or the CR or the like, thereby achieving power saving.

### (2) Performing measurement based on a PSCCH at the RRC layer

As predefined in a protocol or preconfigured by the network side, measurement may be performed based on the PSCCH at the RRC layer. Therefore, when measurement is triggered at the RRC layer, the measurement can be consistent with that of the physical layer when a measurement behavior is performed based on the PSCCH at the physical layer, so that the PSSCH does not need to be measured additionally at the RRC layer when the PSCCH is measured at the physical layer, thereby achieving power saving by reducing measurement objects.

The transmission method in discontinuous reception in this application is hereinafter described by using examples with reference to specific embodiments.

### Embodiment 1 of this application:

A first preset condition is set, to allow a terminal to perform sensing and/or measurement in a DRX inactive state when the terminal meets the first preset condition, or to forbid the terminal to perform sensing and/or measurement in the DRX inactive state, so that power saving can be achieved. In addition, a design of appropriate conditions can also ensure transmission reliability.

For example, when a PDB is large enough for a data packet of the terminal, the terminal may wait for sensing within an on duration time before sending the packet, and does not need to perform sensing in the inactive state. However, when the PDB is small, the terminal cannot wait for a long time. Therefore, to ensure transmission reliability, the terminal can be allowed to perform sensing in the inactive state in this case. Therefore, only a terminal whose PDB is smaller than a threshold is allowed to perform sensing in the inactive state. From an overall perspective, this not only achieves power saving, but also ensures transmission reliability of the data packet.

Alternatively, when assisting UE provides assistance information for the terminal, the assisting UE may provide recommended resources, non-recommended resources, and/or sensed resource collisions, or the like for the terminal. The terminal can rely on the assistance information to select an appropriate resource for sending the packet, and transmission reliability can also be ensured without sensing and/or measurement in the inactive state.

Alternatively, whether the terminal is to perform sensing and/or measurement is adjusted by determining a first measurement quantity, such as a CBR or a CR, a transmission success ratio, or a failure ratio. For example, when the CBR or the CR is greater than a threshold, it indicates that a system congestion level is high. In this case, sensing needs to be performed to ensure transmission reliability, and therefore, sensing and/or measurement are/is allowed in the inactive state. Conversely, when the CBR or the CR is less than a threshold, it indicates that the system congestion level is low. In this case, power consumption of the terminal can be preferentially ensured, and therefore, sensing and/or measurement are/is not allowed in the inactive state. Alternatively, when the transmission success ratio is greater than a threshold or the failure ratio is less than a threshold among the first measurement quantities, it indicates that transmission reliability is high in this case, and therefore, sensing and/or measurement are/is not allowed in the inactive state. Alternatively, when the transmission success ratio is less than a threshold or the failure ratio is greater than a threshold, it indicates that transmission reliability is low. In this case, sensing and/or measurement need/needs to be performed in the inactive state to ensure performance, and therefore, the terminal is allowed to perform sensing and/or measurement in the inactive state.

### Embodiment 2 of this application:

When a behavior of sensing and/or measurement in an inactive state is restricted for a purpose of power saving, a quantity of data packets or a quantity of HARQ processes or the like that a terminal can sense and/or measure in the inactive state may be limited. In other words, a quantity of entities associated with the behavior of sensing and/or measurement is decreased or limited, so that power consumption is low, or when the quantity reaches a threshold, continuous increase of the quantity is restricted, so that power consumption is reduced. When a communication link or a communication group is considered, power saving can also be achieved by considering a total quantity of behaviors of sensing and/or measurement.

### Embodiment 3 of this application:

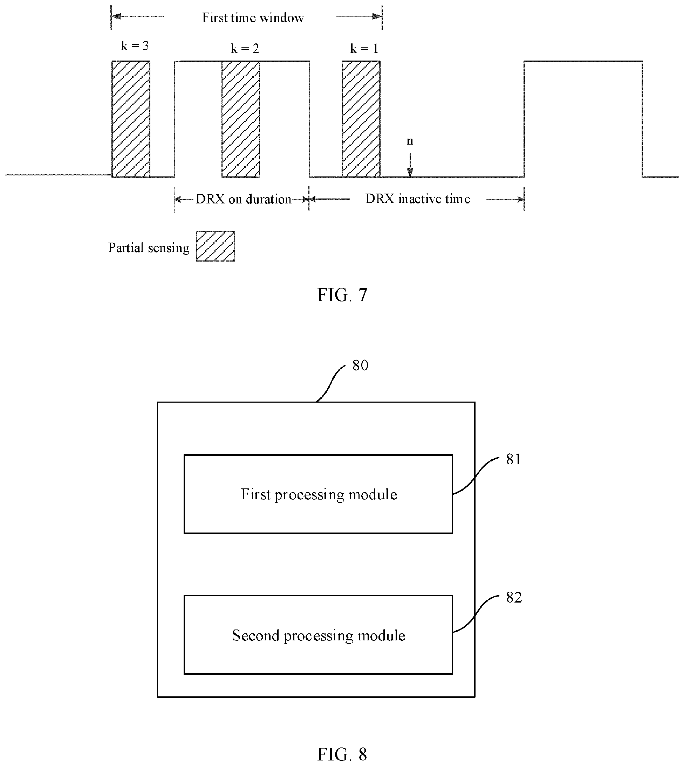

As shown in FIG. 7, when a resource allocation scheme for a terminal is partial sensing, three sensing occasions for sensing are configured in a resource pool or configured by a network in this case, that is, k = 1, 2, and 3, and a length of each window is 10 slots (slots). To restrict an action of sensing and/or measurement of the terminal in an inactive state to achieve power saving, a first time window and a corresponding threshold may be set.

A specific value of a first threshold is set based on a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, a first measurement quantity, or the like.

For example, the first threshold is set to 20 slots. When duration of sensing of the terminal, denoted as a first measurement parameter, reaches the first threshold of 20 slots, no more resources are sensed. As shown in FIG. 7, based on the first threshold, it may be inferred that the terminal can perform sensing only at positions of k = 1 and 2. Alternatively, because the terminal can always perform sensing under an on duration condition, and a first measurement parameter calculates only duration of sensing in the inactive (inactive) state, it is determined that the terminal can perform sensing at positions of k = 1 and 3 in the inactive state. Therefore, in this case, the terminal can perform sensing at all the positions of k = 1, 2, and 3.

For another example, the first threshold is set to two wake-ups. In this case, it may be inferred that the terminal can perform sensing only at the positions of k = 1 and 2. Alternatively, because the terminal can always perform sensing under an on duration condition, if the quantity of wake-ups counts only a quantity of wake-ups in the inactive state and does not count a transition from the inactive state to an on-duration state, the terminal can perform sensing at all the positions of k = 1, 2, and 3.

It should be noted that the transmission method in discontinuous reception according to this embodiment of this application may be performed by a transmission apparatus in discontinuous reception, or a control module for performing the transmission method in discontinuous reception in the transmission apparatus in discontinuous reception. A transmission apparatus in discontinuous reception according to an embodiment of this application is described by assuming that the transmission method in discontinuous reception in this embodiment of this application is performed by the transmission apparatus in discontinuous reception.

Referring to FIG. 8, an embodiment of this application further provides a transmission apparatus 80 in discontinuous reception, including:
a first processing module 81, configured to: when a first preset condition is met, perform sensing and/or measurement in a DRX inactive state; or when a second preset condition is met, skip sensing and/or measurement in a DRX inactive state;
   and/or
a second processing module 82, configured to meet a third preset condition when performing sensing and/or measurement if sensing and/or measurement are/is performed in the DRX inactive state.

In this embodiment of this application, a specific behavior of sensing or measurement of a terminal in the inactive state is clarified, so that when the terminal performs sensing and/or measurement in the DRX inactive state, power saving is achieved while service reliability is ensured.

Optionally, the first preset condition and/or the second preset condition include/includes at least one of the following:
a priority of a data packet or a service is higher than or equal to a first priority threshold;
the priority of the data packet or the service is lower than or equal to a second priority threshold;
a PDB is less than or equal to a first PDB threshold;
the PDB is greater than or equal to a second PDB threshold;
the terminal is located in a specific resource pool;
an assisting terminal provides assistance information for the terminal; and
a second parameter meets a fourth preset condition, where the second parameter includes at least one of the following: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of the data packet, power of the terminal, the priority of the data packet or the service, and a first measurement quantity.

Optionally, the first processing module is configured to skip sensing and/or measurement in the DRX inactive state when the second preset condition includes that the assisting terminal provides the assistance information for the terminal, where the assisting terminal provides the assistance information for the terminal.

Optionally, the first processing module is configured to perform sensing and/or measurement in the DRX inactive state when the first preset condition includes that the assisting terminal provides the assistance information for the terminal and at least one of a priority of the assistance information, QoS, and the PDB meets a corresponding threshold;
or
the first processing module is configured to perform sensing and/or measurement in the DRX inactive state when the first preset condition includes that the assisting terminal provides the assistance information for the terminal and at least one of the priority of the data packet, QoS, and the PDB meets a corresponding threshold.

Optionally, the fourth preset condition includes at least one of the following:
a value of the second parameter is greater than or equal to a first threshold;
the value of the second parameter is less than or equal to a second threshold;
a level of the second parameter is greater than or equal to a third threshold;
the level of the second parameter is less than or equal to a fourth threshold; and
the terminal is in a specific mode or mechanism.

Optionally, the first preset condition, the second preset condition, and/or the third preset condition include/includes: a first parameter for performing sensing and/or measurement in the DRX inactive state on each terminal, each communication link, or each terminal communication group meets at least one of a preset maximum value and a preset minimum value, where the first parameter includes at least one of the following: a quantity of transport blocks, a quantity of sidelink processes, a quantity of HARQ processes, a quantity of MAC PDUs, a quantity of sensing periods of partial sensing, a quantity of PBPS, a quantity of sensing occasions for PBPS, and a quantity of CPS.

Optionally, at least one of the preset maximum value and the preset minimum value is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

Optionally, the first preset condition, the second preset condition, and/or the third preset condition include/includes: within a first time window or duration of a first timer, a first measurement parameter of the terminal, a sidelink process, a HARQ process, a communication link, or a communication group is not less than a fifth threshold and/or is not greater than a sixth threshold.

Optionally, the first measurement parameter includes at least one of the following: duration of sensing and/or measurement, a quantity of sensing and/or measurement, a quantity of transitions from a sleep state to a wake-up state, a battery or power level, and a first measurement quantity.

Optionally, at least one of the duration of sensing and/or measurement and the quantity of sensing and/or measurement counts forward from a first moment or counts forward from a most recent T^{th} window before a first moment, where T is a positive integer greater than or equal to 1.

Optionally, the duration of sensing and/or measurement includes at least one of the following: a quantity of sensing occasions, a quantity of time units for sensing, a quantity of sensing occasions for PBPS, a CPS window length, a quantity of time units for CBR measurement, a quantity of time units for RSRP measurement, or a quantity of time units for CR measurement.

Optionally, the first measurement parameter is calculated only in an inactive time period within the first time window or the duration of the first timer, or calculated in all time periods within the first time window or the duration of the first timer.

Optionally, the first time window is continuous or discontinuous in time domain.

Optionally, the first time window is one of the following: N DRX cycles, M time units, and an entire communication process of a service, where N and M are positive integers greater than or equal to 1.

Optionally, the time unit counts forward from a first moment or counts forward from a most recent T^{th} window before a first moment, where T is a positive integer greater than or equal to 1.

Optionally, the first moment is a time for triggering resource selection, or a P^{th} slot among candidate slots for resource selection, or a time for resource reporting, where P is a positive integer greater than or equal to 1.

Optionally, the first time window, the first timer, the fifth threshold, and/or the sixth threshold are/is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

Optionally, the first measurement quantity includes at least one of the following: QoS, a channel occupancy ratio, channel occupancy, a channel busy ratio, a channel blocking ratio, channel blockage, a channel idle ratio, channel idleness, a quantity of ACKs, a quantity of successful data packet transmissions, a data packet transmission success ratio, a quantity of NACKs, a quantity of failed data packet transmissions, a data packet transmission failure ratio, a quantity of DTXs, a quantity of missed sensing in sensing, and a quantity of false sensing in sensing of a system, a carrier, a BWP, a resource pool, a user, or a connection group.

Optionally, the third preset condition includes at least one of the following:
performing sensing and/or measurement based on a resource allocation scheme or a resource sensing mechanism predefined in a protocol, preconfigured by a network side, configured by a network, indicated by a network, preconfigured by the terminal, configured by the terminal, or indicated by the terminal;
performing sensing and/or measurement only based on PBPS;
performing sensing and/or measurement only based on CPS;
performing sensing and/or measurement only based on full sensing; and
performing sensing and/or measurement only based on PBPS and CPS.

Optionally, the apparatus further includes at least one of the following:
a first measurement module, configured to measure RSRP based on a PSSCH; and
a second measurement module, configured to perform measurement based on a PSCCH at an RRC layer.

The transmission apparatus in discontinuous reception in this embodiment of this application may be an apparatus, or an apparatus or an electronic device with an operating system, or may be a component, an integrated circuit, or a chip in the terminal. The apparatus or the electronic device may be a mobile terminal, or may be a nonmobile terminal. For example, the mobile terminal may include but is not limited to the foregoing illustrated type of the terminal 11. The nonmobile terminal may be a server, a network attached storage (Network Attached Storage, NAS), a personal computer (Personal Computer, PC), a television (Television, TV), a teller machine, a self-service machine, or the like. This is not specifically limited in this embodiment of this application.

The transmission apparatus in discontinuous reception according to this embodiment of this application can implement each process implemented by the method embodiment in FIG. 6, with the same technical effect achieved. To avoid repetition, details are not described herein again.

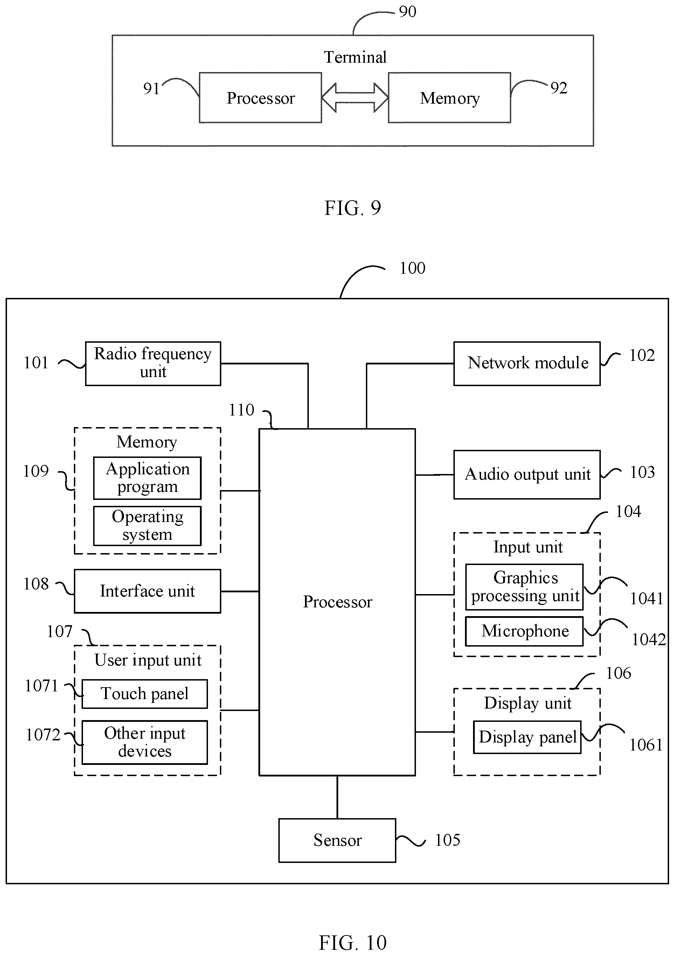

As shown in FIG. 9, an embodiment of this application further provides a terminal 90, including a processor 91, a memory 92, and a program or instructions stored in the memory 92 and capable of running on the processor 91. When the program or instructions are executed by the processor 91, each process of the foregoing embodiment of the transmission method in discontinuous reception is implemented, with the same technical effect achieved. To avoid repetition, details are not described herein again.

An embodiment of this application further provides a terminal. The terminal includes a processor and a communication interface. The processor is configured to: when a first preset condition is met, perform sensing and/or measurement in a discontinuous reception DRX inactive state; or when a second preset condition is met, skip sensing and/or measurement in a DRX inactive state; and/or meet a third preset condition when performing sensing and/or measurement if the terminal performs sensing and/or measurement in the DRX inactive state. The terminal embodiment corresponds to the foregoing terminal-side method embodiment, and each implementation process and implementation of the foregoing method embodiment can be applied to the terminal embodiment, with the same technical effect achieved. Specifically, FIG. 10 is a schematic diagram of a hardware structure of a terminal for implementing an embodiment of this application.

The terminal 100 includes but is not limited to at least some components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the terminal 100 may further include a power supply (for example, a battery) supplying power to all components. Optionally, the power supply may be logically connected to the processor 110 through a power management system. In this way, functions such as charge management, discharge management, and power consumption management are implemented by using the power management system. The terminal structure shown in FIG. 10 does not constitute a limitation on the terminal. The terminal may include more or fewer components than those shown in the figure, or some components are combined, or component arrangements are different. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 101 sends the downlink data to the processor 110 for processing, and in addition, sends uplink data to the network-side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may primarily include a program or instruction storage area and a data storage area. The program or instruction storage area may store an operating system, an application program or an instruction (such as an audio play function and an image play function) required by at least one function, and the like. In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 110 may include one or more processing units. Optionally, the processor 110 may integrate an application processor and a modem processor. The application processor mainly processes the operating system, a user interface, an application program or an instruction, and the like. The modem processor mainly processes wireless communication. For example, the modem processor is a baseband processor. It may be understood that the modem processor may alternatively not be integrated in the processor 110.

The processor 110 is configured to: when a first preset condition is met, perform sensing and/or measurement in a discontinuous reception DRX inactive state; or when a second preset condition is met, skip sensing and/or measurement in a DRX inactive state; and/or meet a third preset condition when performing sensing and/or measurement in the DRX inactive state.

In this embodiment of this application, a specific behavior of sensing or measurement of the terminal in the inactive state is clarified, so that when the terminal performs sensing and/or measurement in the DRX inactive state, power saving is achieved while service reliability is ensured.

Optionally, the first preset condition and/or the second preset condition include/includes at least one of the following:
a priority of a data packet or a service is higher than or equal to a first priority threshold;
the priority of the data packet or the service is lower than or equal to a second priority threshold;
a packet delay budget PDB is less than or equal to a first PDB threshold;
the PDB is greater than or equal to a second PDB threshold;
the terminal is located in a specific resource pool;
an assisting terminal provides assistance information for the terminal; and
a second parameter meets a fourth preset condition, where the second parameter includes at least one of the following: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of the data packet, power of the terminal, the priority of the data packet or the service, and a first measurement quantity.

Optionally, the processor 110 is configured to skip sensing and/or measurement in the DRX inactive state when the assisting terminal provides the assistance information for the terminal.

Optionally, the processor 110 is configured to: when the assisting terminal provides the assistance information for the terminal, and at least one of a priority of the assistance information, QoS, and the PDB meets a corresponding threshold, perform sensing and/or measurement in the DRX inactive state; or when the assisting terminal provides the assistance information for the terminal, and at least one of the priority of the data packet, QoS, and the PDB meets a corresponding threshold, perform sensing and/or measurement in the DRX inactive state.

Optionally, the fourth preset condition includes at least one of the following:
a value of the second parameter is greater than or equal to a first threshold;
the value of the second parameter is less than or equal to a second threshold;
a level of the second parameter is greater than or equal to a third threshold;
the level of the second parameter is less than or equal to a fourth threshold; and
the terminal is in a specific mode or mechanism.

Optionally, the first preset condition, the second preset condition, and/or the third preset condition include/includes: a first parameter for performing sensing and/or measurement in the DRX inactive state on each terminal, each communication link, or each terminal communication group meets at least one of a preset maximum value and a preset minimum value, where the first parameter includes at least one of the following: a quantity of transport blocks, a quantity of sidelink processes, a quantity of hybrid automatic repeat request HARQ processes, a quantity of MAC PDUs, a quantity of sensing periods of partial sensing, a quantity of periodic-based partial sensing PBPS, a quantity of sensing occasions for PBPS, and a quantity of contiguous partial sensing CPS.

Optionally, at least one of the preset maximum value and the preset minimum value is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

Optionally, the first preset condition, the second preset condition, and/or the third preset condition include/includes: within a first time window or duration of a first timer, a first measurement parameter of the terminal, a sidelink process, a HARQ process, a communication link, or a communication group is not less than a fifth threshold and/or is not greater than a sixth threshold.

Optionally, the first measurement parameter includes at least one of the following: duration of sensing and/or measurement, a quantity of sensing and/or measurement, a quantity of transitions from a sleep state to a wake-up state, a battery or power level, and a first measurement quantity.

Optionally, at least one of the duration of sensing and/or measurement and the quantity of sensing and/or measurement counts forward from a first moment or counts forward from a most recent T^{th} window before a first moment, where T is a positive integer greater than or equal to 1.

Optionally, the duration of sensing and/or measurement includes at least one of the following: a quantity of sensing occasions, a quantity of time units for sensing, a quantity of sensing occasions for PBPS, a CPS window length, a quantity of time units for CBR measurement, a quantity of time units for RSRP measurement, or a quantity of time units for CR measurement.

Optionally, the first measurement parameter is calculated only in an inactive time period within the first time window or the duration of the first timer, or calculated in all time periods within the first time window or the duration of the first timer.

Optionally, the first time window is continuous or discontinuous in time domain.

Optionally, the first time window is one of the following: N DRX cycles, M time units, and an entire communication process of a service, where N and M are positive integers greater than or equal to 1.

Optionally, the time unit counts forward from a first moment or counts forward from a most recent T^{th} window before a first moment, where T is a positive integer greater than or equal to 1.

Optionally, the first moment is a time for triggering resource selection, or a P^{th} slot among candidate slots for resource selection, or a time for resource reporting, where P is a positive integer greater than or equal to 1.

Optionally, the first time window, the first timer, the fifth threshold, and/or the sixth threshold are/is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

Optionally, the first measurement quantity includes at least one of the following: QoS, a channel occupancy ratio, channel occupancy, a channel busy ratio, a channel blocking ratio, channel blockage, a channel idle ratio, channel idleness, a quantity of ACKs, a quantity of successful data packet transmissions, a data packet transmission success ratio, a quantity of NACKs, a quantity of failed data packet transmissions, a data packet transmission failure ratio, a quantity of DTXs, a quantity of missed sensing in sensing, and a quantity of false sensing in sensing of a system, a carrier, a BWP, a resource pool, a user, or a connection group.

Optionally, the third preset condition includes at least one of the following:
performing sensing and/or measurement based on a resource allocation scheme or a resource sensing mechanism predefined in a protocol, preconfigured by a network side, configured by a network, indicated by a network, preconfigured by the terminal, configured by the terminal, or indicated by the terminal;
performing sensing and/or measurement only based on PBPS;
performing sensing and/or measurement only based on CPS;
performing sensing and/or measurement only based on full sensing; and
performing sensing and/or measurement only based on PBPS and CPS.

Optionally, the processor 110 is further configured to: measure RSRP based on a PSSCH; and/or perform measurement based on a PSCCH at an RRC layer.

An embodiment of this application further provides a readable storage medium. The readable storage medium stores a program or instructions. When the program or instructions are executed by a processor, each process of the foregoing embodiment of the transmission method in discontinuous reception is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the embodiment of the transmission method in discontinuous reception, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a communication device. The communication device is configured to perform each process of the foregoing embodiment of the transmission method in discontinuous reception, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer program product. The computer program product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A transmission method in discontinuous reception, comprising:
when a first preset condition is met, performing, by a terminal, sensing and/or measurement in a discontinuous reception DRX inactive state; or when a second preset condition is met, skipping, by a terminal, sensing and/or measurement in a DRX inactive state;
and/or
when performing sensing and/or measurement in the DRX inactive state, meeting, by the terminal, a third preset condition.

2. The method according to claim 1, wherein the first preset condition and/or the second preset condition comprise/comprises at least one of the following:
a priority of a data packet or a service is higher than or equal to a first priority threshold;
the priority of the data packet or the service is lower than or equal to a second priority threshold;
a packet delay budget PDB is less than or equal to a first PDB threshold;
the PDB is greater than or equal to a second PDB threshold;
the terminal is located in a specific resource pool;
an assisting terminal provides assistance information for the terminal; and
a second parameter meets a fourth preset condition, wherein the second parameter comprises at least one of the following: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of the data packet, power of the terminal, the priority of the data packet or the service, and a first measurement quantity.

3. The method according to claim 2, wherein the skipping, by a terminal, sensing and/or measurement in a DRX inactive state when a second preset condition is met comprises:
when the assisting terminal provides the assistance information for the terminal, skipping, by the terminal, sensing and/or measurement in the DRX inactive state.

4. The method according to claim 2, wherein the performing, by a terminal, sensing and/or measurement in a DRX inactive state when a first preset condition is met comprises:
when the assisting terminal provides the assistance information for the terminal, and at least one of a priority of the assistance information, quality of service QoS, and the PDB meets a corresponding threshold, performing, by the terminal, sensing and/or measurement in the DRX inactive state;
or
when the assisting terminal provides the assistance information for the terminal, and at least one of the priority of the data packet, QoS, and the PDB meets a corresponding threshold, performing, by the terminal, sensing and/or measurement in the DRX inactive state.

5. The method according to claim 2, wherein the fourth preset condition comprises at least one of the following:
a value of the second parameter is greater than or equal to a first threshold;
the value of the second parameter is less than or equal to a second threshold;
a level of the second parameter is greater than or equal to a third threshold;
the level of the second parameter is less than or equal to a fourth threshold; and
the terminal is in a specific mode or mechanism.

6. The method according to claim 1, wherein
the first preset condition, the second preset condition, and/or the third preset condition comprise/comprises: a first parameter for performing sensing and/or measurement in the DRX inactive state on each terminal, each communication link, or each terminal communication group meets at least one of a preset maximum value and a preset minimum value, wherein
the first parameter comprises at least one of the following: a quantity of transport blocks, a quantity of sidelink processes, a quantity of hybrid automatic repeat request HARQ processes, a quantity of media access control protocol data units MAC PDUs, a quantity of sensing periods of partial sensing, a quantity of periodic-based partial sensing PBPS, a quantity of sensing occasions for PBPS, and a quantity of contiguous partial sensing CPS.

7. The method according to claim 6, wherein at least one of the preset maximum value and the preset minimum value is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

8. The method according to claim 1, wherein
the first preset condition, the second preset condition, and/or the third preset condition comprise/comprises: within a first time window or duration of a first timer, a first measurement parameter of the terminal, a sidelink process, a HARQ process, a communication link, or a communication group is not less than a fifth threshold and/or is not greater than a sixth threshold, wherein
the first measurement parameter comprises at least one of the following: duration of sensing and/or measurement, a quantity of sensing and/or measurement, a quantity of transitions from a sleep state to a wake-up state, a battery or power level, and a first measurement quantity.

9. The method according to claim 8, wherein at least one of the duration of sensing and/or measurement and the quantity of sensing and/or measurement counts forward from a first moment or counts forward from a most recent T^{th} window before a first moment, wherein T is a positive integer greater than or equal to 1.

10. The method according to claim 8, wherein the duration of sensing and/or measurement comprises at least one of the following: a quantity of sensing occasions, a quantity of time units for sensing, a quantity of sensing occasions for PBPS, a CPS window length, a quantity of time units for CBR measurement, a quantity of time units for RSRP measurement, or a quantity of time units for CR measurement.

11. The method according to claim 8, wherein the first measurement parameter is calculated only in an inactive time period within the first time window or the duration of the first timer, or calculated in all time periods within the first time window or the duration of the first timer.

12. The method according to claim 8, wherein the first time window is continuous or discontinuous in time domain.

13. The method according to claim 8, wherein the first time window is one of the following: N DRX cycles, M time units, and an entire communication process of a service, wherein N and M are positive integers greater than or equal to 1.

14. The method according to claim 13, wherein the time unit counts forward from a first moment or counts forward from a most recent T^{th} window before a first moment, wherein T is a positive integer greater than or equal to 1.

15. The method according to claim 9 or 14, wherein the first moment is a time for triggering resource selection, or a P^{th} slot among candidate slots for resource selection, or a time for resource reporting, wherein P is a positive integer greater than or equal to 1.

16. The method according to claim 8, wherein the first time window, the first timer, the fifth threshold, and/or the sixth threshold are/is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

17. The method according to claim 2, 7, 8, or 16, wherein the first measurement quantity comprises at least one of the following: QoS, a channel occupancy ratio, channel occupancy, a channel busy ratio, a channel blocking ratio, channel blockage, a channel idle ratio, channel idleness, a quantity of ACKs, a quantity of successful data packet transmissions, a data packet transmission success ratio, a quantity of NACKs, a quantity of failed data packet transmissions, a data packet transmission failure ratio, a quantity of discontinuous transmissions DTXs, a quantity of missed sensing in sensing, and a quantity of false sensing in sensing of a system, a carrier, a BWP, a resource pool, a user, or a connection group.

18. The method according to claim 1, wherein the third preset condition comprises at least one of the following:
performing sensing and/or measurement based on a resource allocation scheme or a resource sensing mechanism predefined in a protocol, preconfigured by a network side, configured by a network, indicated by a network, preconfigured by the terminal, configured by the terminal, or indicated by the terminal;
performing sensing and/or measurement only based on PBPS;
performing sensing and/or measurement only based on CPS;
performing sensing and/or measurement only based on full sensing; and
performing sensing and/or measurement only based on PBPS and CPS.

19. The method according to claim 1, further comprising:
measuring RSRP based on a PSSCH;
and/or
performing measurement based on a PSCCH at an RRC layer.

20. A transmission apparatus in discontinuous reception, comprising:
a first processing module, configured to: when a first preset condition is met, perform sensing and/or measurement in a DRX inactive state; or when a second preset condition is met, skip sensing and/or measurement in a DRX inactive state;
and/or
a second processing module, configured to meet a third preset condition when performing sensing and/or measurement if sensing and/or measurement are/is performed in the DRX inactive state.

21. The apparatus according to claim 20, wherein the first preset condition and/or the second preset condition comprise/comprises at least one of the following:
a priority of a data packet or a service is higher than or equal to a first priority threshold;
the priority of the data packet or the service is lower than or equal to a second priority threshold;
a PDB is less than or equal to a first PDB threshold;
the PDB is greater than or equal to a second PDB threshold;
a terminal is located in a specific resource pool;
an assisting terminal provides assistance information for the terminal; and
a second parameter meets a fourth preset condition, wherein the second parameter comprises at least one of the following: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of the data packet, power of the terminal, the priority of the data packet or the service, and a first measurement quantity.

22. The apparatus according to claim 21, wherein
the first processing module is configured to skip sensing and/or measurement in the DRX inactive state when the second preset condition comprises that the assisting terminal provides the assistance information for the terminal, wherein the assisting terminal provides the assistance information for the terminal.

23. The apparatus according to claim 21, wherein
the first processing module is configured to perform sensing and/or measurement in the DRX inactive state when the first preset condition comprises that the assisting terminal provides the assistance information for the terminal and at least one of a priority of the assistance information, QoS, and the PDB meets a corresponding threshold;
or
the first processing module is configured to perform sensing and/or measurement in the DRX inactive state when the first preset condition comprises that the assisting terminal provides the assistance information for the terminal and at least one of the priority of the data packet, QoS, and the PDB meets a corresponding threshold.

24. The apparatus according to claim 21, wherein the fourth preset condition comprises at least one of the following:
a value of the second parameter is greater than or equal to a first threshold;
the value of the second parameter is less than or equal to a second threshold;
a level of the second parameter is greater than or equal to a third threshold;
the level of the second parameter is less than or equal to a fourth threshold; and
the terminal is in a specific mode or mechanism.

25. The apparatus according to claim 20, wherein
the first preset condition, the second preset condition, and/or the third preset condition comprise/comprises: a first parameter for performing sensing and/or measurement in the DRX inactive state on each terminal, each communication link, or each terminal communication group meets at least one of a preset maximum value and a preset minimum value, wherein
the first parameter comprises at least one of the following: a quantity of transport blocks, a quantity of sidelink processes, a quantity of HARQ processes, a quantity of MAC PDUs, a quantity of sensing periods of partial sensing, a quantity of PBPS, a quantity of sensing occasions for PBPS, and a quantity of CPS.

26. The apparatus according to claim 25, wherein at least one of the preset maximum value and the preset minimum value is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

27. The apparatus according to claim 20, wherein
the first preset condition, the second preset condition, and/or the third preset condition comprise/comprises: within a first time window or duration of a first timer, a first measurement parameter of the terminal, a sidelink process, a HARQ process, a communication link, or a communication group is not less than a fifth threshold and/or is not greater than a sixth threshold, wherein
the first measurement parameter comprises at least one of the following: duration of sensing and/or measurement, a quantity of sensing and/or measurement, a quantity of transitions from a sleep state to a wake-up state, a battery or power level, and a first measurement quantity.

28. The apparatus according to claim 27, wherein at least one of the duration of sensing and/or measurement and the quantity of sensing and/or measurement counts forward from a first moment or counts forward from a most recent T^{th} window before a first moment, wherein T is a positive integer greater than or equal to 1.

29. The apparatus according to claim 27, wherein the duration or quantity of sensing and/or measurement comprises at least one of the following: a quantity of sensing occasions, a quantity of time units for sensing, a quantity of sensing occasions for PBPS, a CPS window length, a quantity of time units for CBR measurement, a quantity of time units for RSRP measurement, or a quantity of time units for CR measurement.

30. The apparatus according to claim 27, wherein the first measurement parameter is calculated only in an inactive time period within the first time window or the duration of the first timer, or calculated in all time periods within the first time window or the duration of the first timer.

31. The apparatus according to claim 27, wherein the first time window is continuous or discontinuous in time domain.

32. The apparatus according to claim 27, wherein the first time window is one of the following: N DRX cycles, M time units, and an entire communication process of a service, wherein N and M are positive integers greater than or equal to 1.

33. The apparatus according to claim 32, wherein the time unit counts forward from a first moment or counts forward from a most recent T^{th} window before a first moment, wherein T is a positive integer greater than or equal to 1.

34. The apparatus according to claim 28 or 33, wherein the first moment is a time for triggering resource selection, or a P^{th} slot among candidate slots for resource selection, or a time for resource reporting, wherein P is a positive integer greater than or equal to 1.

35. The apparatus according to claim 27, wherein the first time window, the first timer, the fifth threshold, and/or the sixth threshold are/is related to at least one of the following second parameters: a power saving mode, a resource allocation scheme, a DRX cycle, DRX on duration, a ratio of DRX on duration to the DRX cycle, DRX inactive duration, a ratio of DRX inactive duration to the DRX cycle, a transmission period of a data packet, power of the terminal, a priority of the data packet or a service, and a first measurement quantity.

36. The apparatus according to claim 21, 26, 27, or 35, wherein the first measurement quantity comprises at least one of the following: QoS, a channel occupancy ratio, channel occupancy, a channel busy ratio, a channel blocking ratio, channel blockage, a channel idle ratio, channel idleness, a quantity of ACKs, a quantity of successful data packet transmissions, a data packet transmission success ratio, a quantity of NACKs, a quantity of failed data packet transmissions, a data packet transmission failure ratio, a quantity of DTXs, a quantity of missed sensing in sensing, and a quantity of false sensing in sensing of a system, a carrier, a BWP, a resource pool, a user, or a connection group.

37. The apparatus according to claim 20, wherein the third preset condition comprises at least one of the following:
performing sensing and/or measurement based on a resource allocation scheme or a resource sensing mechanism predefined in a protocol, preconfigured by a network side, configured by a network, indicated by a network, preconfigured by the terminal, configured by the terminal, or indicated by the terminal;
performing sensing and/or measurement only based on PBPS;
performing sensing and/or measurement only based on CPS;
performing sensing and/or measurement only based on full sensing; and
performing sensing and/or measurement only based on PBPS and CPS.

38. The apparatus according to claim 20, further comprising at least one of the following:
a first measurement module, configured to measure RSRP based on a PSSCH; and
a second measurement module, configured to perform measurement based on a PSCCH at an RRC layer.

39. A terminal, comprising a processor, a memory, and a program or instructions stored in the memory and capable of running on the processor, wherein when the program or instructions are executed by the processor, the steps of the transmission method in discontinuous reception according to any one of claims 1 to 19 are implemented.

40. A readable storage medium, wherein the readable storage medium stores a program or instructions, and when the program or instructions are executed by a processor, the steps of the transmission method in discontinuous reception according to any one of claims 1 to 19 are implemented.

41. A chip, comprising a processor and a communication interface, wherein the communication interface is coupled to the processor, and the processor is configured to run a program or instructions to implement the steps of the transmission method in discontinuous reception according to any one of claims 1 to 19.

42. A computer program product, wherein the computer program product is executed by at least one processor to implement the steps of the transmission method in discontinuous reception according to any one of claims 1 to 19.

43. A communication device, configured to perform the steps of the transmission method in discontinuous reception according to any one of claims 1 to 19.
